# EUROPÄISCHE PATENTSCHRIFT

(11) **EP 2 430 968 B1**
(45) Veröffentlichungstag und Bekanntmachung des Hinweises auf die Patenterteilung: **17.07.2019**
(21) Anmeldenummer: 11179160.4
(22) Anmeldetag: 29.08.2011
(51) Int. Cl.: A47L 15/42

(54) **Wasserführendes Haushaltsgerät, insbesondere Geschirrspülmaschinen**
Water-guiding household appliance, in particular dishwashers
Appareil ménager à conduite d'eau, notamment lave-vaisselle

(30) Priorität: 14.09.2010 DE 102010040691
(43) Veröffentlichungstag der Anmeldung: 21.03.2012
(73) Patentinhaber: BSH Hausgeräte GmbH, 81739 München (DE)
(72) Erfinder: Büsing, Johannes, 86494 Emersacker (DE); Lutz, Stephan, 86637 Zusamaltheim (DE); Pertermann, Hans-Holger, 01738 Dorfhain (DE)

(56) Entgegenhaltungen:
- EP-A1- 1 681 007
- WO-A1-2007/077123
- WO-A1-2009/006917
- JP-A- H0 420 319
- KR-A- 20040 063 272

## Beschreibung

Die Erfindung betrifft ein wasserführendes Haushaltsgerät, insbesondere eine Geschirrspülmaschine, mit zwei flüssigkeitsführenden Bauteilen, wobei ein flüssigkeitsführendes Bauteil einen angeformten Anschlussstutzen aufweist, der mit dem anderen flüssigkeitsführenden Bauteil durch eine Fügebewegung in Axialrichtung des Anschlussstutzens flüssigkeitsdicht verbunden ist.

Wasserführende Haushaltsgeräte, wie z. B. Geschirrspülmaschinen, weisen im Bodenbereich des Spülbehälters einen Pumpentopf auf, an dem eine Umwälzpumpe angeschlossen ist. Im Spülbetrieb wird die im Pumpentopf gesammelte Spülflüssigkeit von der Umwälzpumpe angesaugt und zu Sprüheinrichtungen der Geschirrspülmaschine geleitet. Zwischen dem Pumpentopf und der Umwälzpumpe ist eine Geräuschentkopplung vorgesehen. Diese verhindert eine Übertragung von betriebsbedingten Schwingungen ausgehend von der Umwälzpumpe auf den Spülbehälter. Dabei kann zur Geräuschentkopplung eine Dichtung aus einem thermoplastischen Elastomer an eine Umwälzpumpe angeformt sein, die als Anschlussstutzen zur Herstellung einer Verbindung mit einem weitern flüssigkeitsführenden Bauteil, wie z. B. einem Leitungsabschnitt dient. Zur Herstellung einer flüssigkeitsdichten Verbindung ist jedoch die Montage einer Ohrklemme oder Drahtschelle erforderlich, was den Montageaufwand erhöht.

Aus der WO 2009/006917 A1 ist ein wasserführendes Haushaltsgerät aufweisend eine Umwälzpumpe, einen rohrähnlichen Auslassanschluss und ein nachfolgendes Rohr, das an den Auslassanschluss angeschlossen ist; bekannt. Dabei ist eine Entkopplungsvorrichtung zur Dämpfung der von der Umwälzpumpe erzeugten Vibrationen zwischen dem Auslassanschluss und dem nachfolgenden Rohr bereitgestellt. Die Entkopplungsvorrichtung weist dabei mindestens ein Dichtungselement aus einem an eine Dämpfung der von der Umwälzpumpe erzeugten Vibrationen angepassten Werkstoff auf, wobei das Dichtungselement eine radiale Strecke zwischen dem Auslassanschluss oder einem direkt an den Auslassanschluss angeschlossenen Verlängerungselement und dem nachfolgenden Rohr oder einem direkt an das nachfolgende Rohr angeschlossenen Anschlusselement abdichtet.

Es ist Aufgabe der Erfindung, ein wasserführendes Haushaltsgerät, insbesondere eine Geschirrspülmaschine bereitzustellen, bei der der Montageaufwand gering ist.

Erfindungsgemäß ist ein Schwingungsdämpfer vorgesehen, der in Axialrichtung steif zur Durchführung der Fügebewegung ausgebildet ist und um eine Drehachse zur Aufnahme von Torsionsschwingungen zwischen den beiden Bauteilen verformbar ausgebildet ist. Der Schwingungsdämpferist dem Anschlussstutzen zugeordnet und als Schwingungsdämpfungsabschnitt des Anschlussstutzens ausgebildet. Der Schwingungsdämpfer ist derart steif ausgebildet, dass eine Montage durch eine Fügebewegung der beiden Bauteile möglich ist, d.h. es erfolgt keine oder lediglich eine geringfügige Verformung während der Montage. Somit ist der Schwingungsdämpfer derart steif ausgebildet, dass mindestens die Reibungskräfte überwindende Kräfte übertragen werden können, wenn die beiden Bauteile miteinander verbunden werden und die Reibungskräfte im Verbindungsbereich überwunden werden müssen. Es können auch Fehlerfälle bei der Montage berücksichtigt werden, z.B. wenn keine Gleitmittel verwendet werden oder bei einem maschinellen Fügen zu hohe Kräfte aufgebracht werden, in dem der Schwingungsdämpfer entsprechend steif ausgebildet wird. Ferner kann der Schwingungsdämpfer Abschnitte aufweisen, die weniger steif ausgebildet sind und sich während der Fügebewegung in Axialrichtung verformen, wie z.B. elastische Dichtungsabschnitte.

Der Schwingungsdämpfer ist z.B. in Umfangsrichtung elastisch nachgiebig ausgebildet, wodurch Torsionsschwingungen gedämpft werden können und damit die Übertragung von Torsionsschwingungen von einem auf das andere Bauteil. Hierzu ist vorzugsweise vorgesehen, dass die Drehachse sich in Axialrichtung erstreckt. Dabei erstreckt sich die Axialrichtung in Durchflussrichtung durch den Anschlussstutzen und im Fall eines Anschlussstutzens mit kreisförmigem Querschnitt ist die Drehachse die Symmetrieachse des Anschlussstutzens. Auf diese Weise kann nicht nur das gummielastische Dichtelement zur flüssigkeitsdichten Verbindung zwischen angrenzenden flüssigkeitsführenden Bauteilen Motorschwingungen aufnehmen, sondern zusätzlich auch der Anschlussstutzen zumindest eines der beiden flüssigkeitsführenden Bauteile.

Vorzugsweise ist vorgesehen, dass der Schwingungsdämpfer in Axialrichtung steifer ausgebildet ist als in Richtung der Drehachse, die sich um die Axialrichtung erstreckt. So wird eine Montage mit besonders geringen Verformungen möglich. Es ist aber auch möglich, dass der Schwingungsdämpfer in Axialrichtung weniger steif ist als um die Drehachse, wenn z.B. eine Übertragung von Torsionsschwingungen durch ein um die Drehachse relativ steifen Schwingungsdämpfer unterbunden werden kann.

Der Schwingungsdämpfer kann vorzugsweise zwischen einem am freien Ende des Anschlussstutzens vorgesehenen Verbindungsabschnitt und dem Gehäuse des flüssigkeitsführenden Bauteils angeordnet sein. Im Montagevorgang wird der Anschlussstutzen mit seinem stirnseitigen Verbindungsabschnitt in Steckverbindung mit dem Anschlussstutzen eines angrenzenden Bauteils gebracht. Der Schwingungsdämpfer kann demgegenüber in Form von Materialschwächungen unmittelbar am Übergang zwischen dem Anschlussstutzen und dem Bauteil-Gehäuse vorgesehen werden. In einer Ausführungsform kann der Schwingungsdämpfer zumindest eine Axialrippe sein. Diese kann einen Freiraum zwischen dem Verbindungsabschnitt des Anschlussstutzens und dem Bauteil-Gehäuse überbrücken.

Vorzugsweise ist der Verbindungsabschnitt des Anschlussstutzens über die zumindest eine Axialrippe steif am Gehäuse abgestützt. Der Anschlussstutzen bildet somit insgesamt ein in Axialrichtung starres Widerlager, wodurch angrenzende Bauteile ohne weiteres betriebssicher in Steckverbindung mit dem Anschlussstutzen gebracht werden können.

Bevorzugt kann die Axialrippe ausreichend schmal mit geringer Materialstärke gefertigt werden. Dadurch ist vorteilhaft in Axialrichtung eine ausreichende Versteifung bereitgestellt, jedoch bleibt zur Aufnahme der Tangentialschwingungen eine ausreichende Torsionsfähigkeit erhalten. Als Varianten können die Axialrippen auch spiralförmig, bogenförmig oder gekröpft angeordnet werden, so dass nicht nur Tangentialschwingungen, sondern auch zusätzlich Axialschwingungen aufgenommen werden können.

Wie oben erwähnt, kann der Verbindungsabschnitt des Anschlussstutzen zumindest über einen Freiraum vom Bauteil-Gehäuse beabstandet sein. Der Freiraum ist erfindungsgemäß mittels eines Dichtelementes flüssigkeitsdicht überbrückt. Das Dichtelement kann daher radial innerhalb des Schwingungsdämpfers verlaufen und in flüssigkeitsdichter Verbindung mit einem Innenumfangsabschnitt einer Öffnung des Bauteil-Gehäuses sein. Dabei kann der Schwingungsdämpfer des Anschlussstutzens radial außerhalb dieser Gehäuse-Öffnung am Gehäuse angeformt sein.

Bei der oben angegebenen Anordnung ist eine ausreichende Stabilität des sich zwischen dem Verbindungsabschnitt des Anschlussstutzens und dem Bauteil-Gehäuse erstreckenden Dichtelementes von Bedeutung. Hierzu kann sich das Dichtelement an einem Stützring abstützen. Dieser kann aus Stabilitätsgründen insbesondere am Verbindungsabschnitt des Anschlussstutzens angeformt sein.

Bevorzugt kann sich das Dichtelement bis zum stirnseitigen Verbindungsabschnitt des Anschlussstutzens erstrecken. Auf diese Weise kann das Dichtelement einerseits denn oben erwähnten Freiraum zwischen dem Anschlussstutzen und dem Gehäuse überbrücken. Andererseits kann das Dichtelement zusätzlich auch eine flüssigkeitsdichte Steckverbindung mit dem angrenzenden flüssigkeitsführenden Bauteil gewährleisten.

Zur weiteren Schwingungsdämpfung insbesondere von Axialschwingungen kann das Dichtelement einen radial nach innen eingezogenen Ringbund aufweisen. Dieser kann einem Bewegungsanschlag für einen Anschlussstutzen eines angrenzenden Bauteils dienen. Der Ringbund des Dichtelementes kann einer Abstufung abgestützt sein, an der der Verbindungsabschnitt des Anschlussstutzens in den oben erwähnten Stützring zur Abstützung des Dichtelementes übergeht.

Das Dichtelement kann am Verbindungsabschnitt des Anschlussstutzens innenseitig im Anschlussstutzen angeordnet sein, während es im Schwingungsdämpfer radial außerhalb des Stützringes angeordnet ist. Dabei kann das Dichtelement durch Aussparungen geführt sein, die in der Abstufung zwischen dem Verbindungsabschnitt und dem Stützring eingearbeitet sind.

Bevorzugt ist der Anschlussstutzen des flüssigkeitsführenden Bauteils sowie das Dichtelement aus Kunststoff gefertigt. Bevorzugt ist hierbei die Anwendung einer Zweikomponenten-Spritzgusstechnik, bei der der Anschlussstutzen aus einer Kunststoff-Hartkomponente und das Dichtelement aus einer Kunststoff-Weichkomponente gebildet ist. Die Weich-Komponente weist dabei eine Shore-Härte im Bereich von 50 bis 70 auf, während die Hartkomponente eine entsprechend größere Shore-Härte aufweist.

Vorzugsweise ist vorgesehen, dass die Axialrippe sich in radialer Richtung mit einer Länge erstreckt, die größer als die Länge ist, in die sich die Axialrippe in Umfangsrichtung erstreckt. Somit ist die Axialrippe in radialer Richtung betrachtet, deutlich länger als breiter ausgebildet. Hierdurch wird erreicht, dass Axialrippen bereitgestellt werden, die in Axialrichtung, das heißt, in Durchflussrichtung durch den Anschlussstutzen und/oder in Montagerichtung des Anschlussstutzens steif sind, um beispielsweise eine entsprechende Montagebewegung ohne Zuhilfenahme weiterer Werkzeuge ausführen zu können und andererseits die Axialrippen in der Lage sind, Torsionsschwingungen in Umfangsrichtung aufzunehmen.

Schließlich ist vorzugsweise vorgesehen, dass das Gehäuse als Pumpentopf einer Geschirrspülmaschine ausgebildet ist, wobei die Geschirrspülmaschine insbesondere als Haushalts-Geschirrspülmaschine ausgebildet sein kann, so dass insbesondere bei Haushaltsgeräten, wie Geschirrspülmaschinen, die im Wohnbereich aufgestellt werden, die Geräuschemission reduziert sind.

Nachfolgend ist ein Ausführungsbeispiel der Erfindung anhand der beigefügten Figuren beschrieben.

Es zeigen:
- Fig. 1: in einer Schnittdarstellung eine in einer Geschirrspülmaschine eingebaute Umwälzpumpe;
- Fig. 2: das mit einer Kunststoff-Weichkomponente hergestellte Dichtelement der Umwälzpumpe in Alleinstellung; und
- Fig. 3: der aus einer Kunststoff-Hartkomponente hergestellte Anschlussstutzen der Umwälzpumpe.

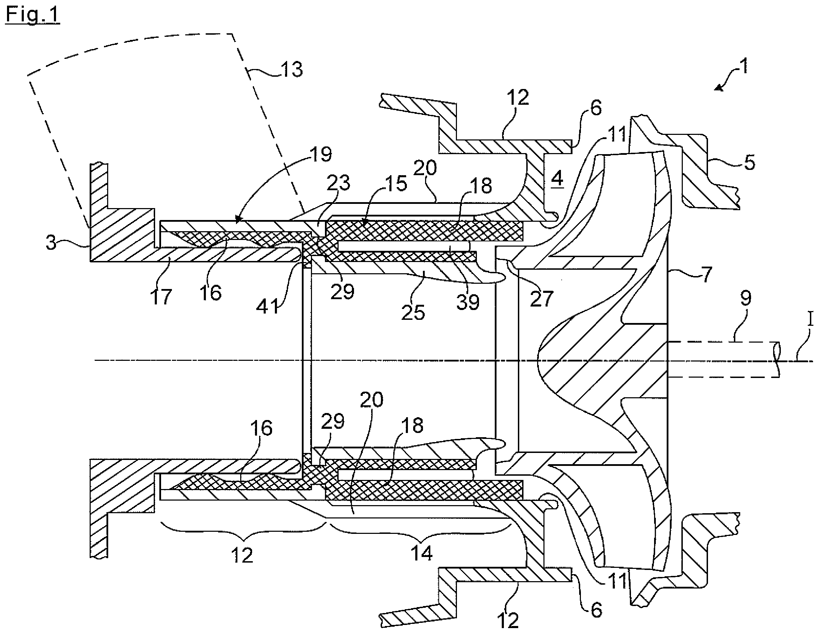

In der Fig. 1 ist als Ausführungsbeispiel für ein wasserführendes Haushaltsgerät eine Geschirrspülmaschine in einer Schnittdarstellung ein Ausschnitt aus einer Umwälzpumpe 1 gezeigt, die stromab eines Pumpentopfes 3 einer Geschirrspülmaschine angeordnet ist. Die Umwälzpumpe 1 fördert Spülflüssigkeit ausgehend vom Pumpentopf 3 zu Sprüheinrichtungen innerhalb eines Spülbehälters der Geschirrspülmaschine. Hierzu weist die Umwälzpumpe 1 ein Gehäuse 5 auf, in dem ein Laufrad 7 um eine Drehachse I drehbar angeordnet ist. Das Laufrad 7 ist über eine gestrichelt angedeutete Antriebswelle 9 mit einem nicht gezeigten Elektromotor trieblich verbunden.

Im Gehäuse 5 der Umwälzpumpe 1 ist eine Laufradkammer 4 mit einer Einlassöffnung 11 vorgesehen. Die Einlassöffnung 11 ist durch einen Ringkragen ausgebildet, der rotationssymmetrisch zur Drehachse I des Laufrades 7 am Gehäuse 5 angeformt ist. Die Laufradkammer 5 geht über einen radial offenen Ringspalt 6 in eine umfangsseitige Strömungskammer 12 über, die wiederum in einen druckseitigen Auslassstutzen 13 der Umwälzpumpe 1 einmündet, der in der Fig. 1 gestrichelt dargestellt ist.

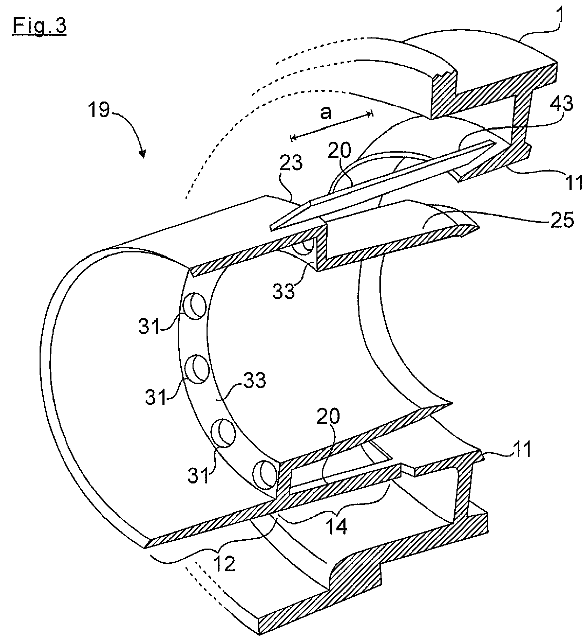

Die Umwälzpumpe 1 weist einlassseitig einen Anschlussstutzen 19 auf. Der Anschlussstutzen 19 ist in Axialrichtung in einen Verbindungsabschnitt 12, in den gemäß der Fig. 1 ein Auslassstutzen 17 des Pumpentopfes 3 eingesetzt ist, und in einen als Schwingungsdämpfungsabschnitt ausgebildeten Schwingungsdämpfer 14 unterteilt. Der Schwingungsdämpfungsabschnitt weist zwei einander gegenüberliegende Axialrippen 20 auf, die den Verbindungsabschnitt 12 des Anschlussstutzens 19 mit dem Gehäuse 5 verbinden. Die beiden Axialrippen 20 überbrücken somit gemäß der Fig. 3 einen Freiraum a zwischen dem Verbindungsabschnitt 12 und dem Pumpengehäuse 5.

Außerdem ist der Verbindungsabschnitt 12 des Anschlussstutzens 19 über ein hohlzylindrisches Dichtelement 15 flüssigkeitsdicht mit dem Pumpengehäuse 5 verbunden. Hierzu ist das Dichtelement 15 gemäß der Fig. 1 an einer Innenumfangswand des Ringkragens 11 angeformt. Das Dichtungselement 15 ist im Unterschied zum Anschlussstutzen 19 aus einer elastisch nachgiebigen Kunststoff-Weichkomponente gebildet. An einem stromaufwärtigen Ende des Dichtelements 15 ist der Auslassstutzen 17 des Pumpentopfes 3 in eine Innenmantelfläche des Dichtelements 15 eingepresst.

Die zur Herstellung des Dichtelements 15 verwendete Kunststoff-Weichkomponente weist nur eine eingeschränkte Eigensteifigkeit auf, was für eine flüssigkeitsdichte Anbindung an den Anschlussstutzen 17 montagetechnisch von Nachteil ist. Zur Steigerung der Eigensteifigkeit ist daher das Dichtelement 15 zusammen mit dem Anschlussstutzen 17 in der Zwei-Komponenten-Spritzgusstechnik als eine Baueinheit hergestellt.

Wie aus der Fig. 1 in Verbindung mit der Fig. 3 hervorgeht, geht der Verbindungsabschnitt 12 des Anschlussstutzens 17 an einer Abstufung 23 in einen durchmesserkleineren Stützring 25 über. Der durchmesserkleinere Stützring 25 ragt gemäß der Fig. 1 in Axialrichtung mit seiner Stirnseite berührungsfrei in eine rotationssymmetrische Ansaugöffnung 27 des Laufrades 7 ein.

Wie aus der Fig. 1 weiter hervorgeht, weist das Dichtelement 15 einen innenliegenden Dichtring 16 und einen außenliegenden Dichtring 18 auf. Der innenliegende Dichtring 16 des Dichtelements 15 ist am Verbindungsabschnitt 12 des Verstärkungselements 19 zwischen dessen Innenumfang und einem Außenumfang des Auslassstutzens 17 eingepresst. Demgegenüber ist der außenliegende Dichtring 18 des Dichtelements 15 am stromabwärtigen Stützring 25 zwischen dessen Außenumfang und der Innenumfangswand des Ringkragens 11 angeordnet.

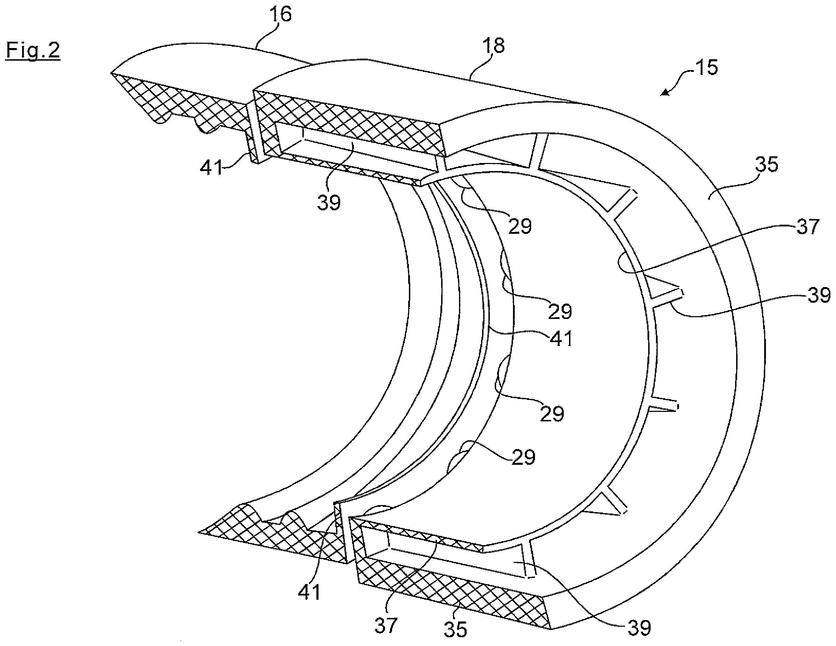

Die Dichtringe 16, 18 des Dichtelements 15 sind einstückig ausgebildet. Die Dichtungsringe 16, 18 sind hierzu über Verbindungsstege 29 in Verbindung, wie sie in der Fig. 1 oder in der Fig. 2 gezeigt sind. Die Verbindungsstege 29 erstrecken sich durch entsprechende Aussparungen 31, die gemäß der Fig. 3 in einer Ringschulter 33 der Abstufung 23 vorgesehen sind. Das einteilig gebildete Dichtelement 15 ist somit sowohl am Innenumfang des Verbindungsabschnittes 12 als auch am Außenumfang des stromabwärtigen Stützringes 25 des Anschlussstutzens 19 vorgesehen.

Das Dichtelement 15 ist zwischen dem Ringkragen 11 des Pumpengehäuses 1 und dem durchmesserkleineren Stützring 25 des Anschlussstutzens 19 mit geeigneter Elastizität angeordnet, um die Übertragung von Torsionsschwingungen zu reduzieren. Zur Einstellung der Elastizität speziell am Stützring 25 ist das Dichtelement 15 gemäß den Fig. 1 und 2 doppelwandig mit einer am Ringkragen 11 angeformten Außenwand 35 sowie einer am durchmesserkleineren Stützring 25 angeformten Innenwand 37 ausgebildet. Für eine ausreichende Steifigkeit in der Radialrichtung sind zwischen den Innen- und Außenwänden 35, 37 des Dichtelement 15 Radialstege 39 angeordnet, die den Ringspalt zwischen den Innen- und Außenwänden 35, 37 in der Umfangsrichtung unterteilen.

Die Ringschulter 33 an der Abstufung 23 des Anschlussstutzens 19 bildet bei der Montage des Auslassstutzens 17 in der Axialrichtung einen Bewegungsanschlag. Dabei liegt die Stirnseite des Auslassstutzens 17 nicht unmittelbar auf der aus der Hartkomponente gefertigten Ringschulter 33 des Verstärkungselementes 19, sondern unter Zwischenschaltung eines umlaufenden Ringsteges 41, der vom Dichtungsstutzen 15 radial nach innen eingezogen ist.

Beim Zusammenbau wird der Anschlussstutzen 17 des Pumpentopfes 3 in Axialrichtung in das Dichtelement 15 eingepresst. Um den Einpressvorgang zu vereinfachen, ist der Anschlussstutzen 19 in Axialrichtung steif am Pumpengehäuse 1 abgestützt. Hierzu ist der Anschlussstutzen 19 im Bereich seiner Abstufung 23 mit den beiden diametral gegenüberliegenden Axialrippen 20 außerhalb des Ringkragens 11 am Pumpengehäuse 5 angeformt. Da der Verbindungsabschnitt 12 des Anschlussstutzens 19 nur über die beiden schmalen Axialrippen 20 am Pumpengehäuse 1 angebunden ist, wird die zur Schwingungsdämpfung erforderliche elastische Nachgiebigkeit des Dichtungsstutzens 15 in der Tangentialrichtung nicht übermäßig beeinträchtigt.

### BEZUGSZEICHENLISTE

- 1: Umwälzpumpe
- 3: Pumpentopf
- 5: Gehäuse
- 7: Laufrad
- 9: Antriebswelle
- 11: Pumpeneinlass
- 12: Verbindungsabschnitt
- 13: Druckstutzen
- 14: Schwingungsdämpfer
- 15: Dichtelement
- 16: innerer Dichtring
- 17: Anschlussstutzen
- 18: äußerer Dichtring
- 19: Verstärkungselement
- 20: Axialrippen
- 23: Abstufung
- 25: Stützring
- 27: Einlassöffnung
- 29: Verbindungsstege
- 31: Aussparungen
- 33: Ringschulter
- 35: Außenwand
- 37: Innenwand
- 39: Ringspalt
- 41: Ringsteg
- I: Drehachse
- a: Freiraum

## Patentansprüche

1. Wasserführendes Haushaltsgerät, insbesondere Geschirrspülmaschine, mit zwei flüssigkeitsführenden Bauteilen (1, 3), wobei ein flüssigkeitsführendes Bauteil (1) einen angeformten Anschlussstutzen (19) aufweist, der mit dem anderen flüssigkeitsführenen Bauteil (3) durch eine Fügebewegung in Axialrichtung (I) des Anschlussstutzens (19) flüssigkeitsdicht verbunden ist, wobei dem Anschlussstutzen (19) ein Schwingungsdämpfer (14) zugeordnet ist, der in Axialrichtung (I) steif zur Durchführung der Fügebewegung ausgebildet ist und zur Aufnahme von Torsionsschwingungen zwischen den beiden flüssigkeitsführenden Bauteilen (1, 3) um eine Drehachse verformbar ist, **dadurch gekennzeichnet, dass** das flüssigkeitsführende Bauteil (1) in Axialrichtung (I) hintereinander angeordnet einen dem Anschlussstutzen (19) zugeordneten Verbindungsabschnitt (12) zum Verbinden mit dem anderen flüssigkeitsführenden Bauteil (3), den als Schwingungsdämpfungsabschnitt ausgebildeten Schwingungsdämpfer (14) und ein Gehäuse (5) umfasst, wobei der Verbindungsabschnitt (12) des Anschlussstutzens (19) zumindest über einen Freiraum (a) von dem Gehäuse (5) des flüssigkeitsführenden Bauteils (1) beabstandet ist und ein Dichtelement (15) zwischen dem Verbindungsabschnitt (12) des Anschlussstutzens (19) und dem Gehäuse (5) des flüssigkeitsführenden Bauteils (1) angeordnet ist, welches den Freiraum (a) flüssigkeitsdicht überbrückt.

2. Wasserführendes Haushaltsgerät nach Anspruch 1, **dadurch gekennzeichnet, dass** die Drehachse sich in Axialrichtung (I) erstreckt.

3. Wasserführendes Haushaltsgerät nach Anspruch 2, **dadurch gekennzeichnet, dass** der Schwingungsdämpfer (14) in Axialrichtung (I) steifer ausgebildet ist als in Richtung der Drehachse, die sich um die Axialrichtung (I) erstreckt.

4. Wasserführendes Haushaltsgerät nach einem der vorgehenden Ansprüche, **dadurch gekennzeichnet, dass** der Schwingungsdämpfer (14) zumindest eine sich in Axialrichtung (I) erstreckende Axialrippe (20) ist, die einen Freiraum (a) zwischen dem Verbindungsabschnitt (12) und dem Gehäuse (5) des flüssigkeitsführenden Bauteils (1) überbrückt.

5. Wasserführendes Haushaltsgerät nach einem der vorgehenden Ansprüche, **dadurch gekennzeichnet, dass** das Dichtelement (15) radial innerhalb des Schwingungsdämpfers (14) des Anschlussstutzens (19) angeordnet ist.

6. Wasserführendes Haushaltsgerät nach einem der vorgehenden Ansprüche, **dadurch gekennzeichnet, dass** das Dichtelement (15) eine fluiddichte Verbindung mit einer Innenumfangsfläche einer Öffnung (11) des Gehäuses (5) bildet.

7. Wasserführendes Haushaltsgerät nach einem der vorgehenden Ansprüche, **dadurch gekennzeichnet, dass** der Schwingungsdämpfer (14) radial außerhalb der Gehäuseöffnung (11) am Gehäuse (5) angeformt ist.

8. Wasserführendes Haushaltsgerät nach einem der vorhergehenden Ansprüche, **dadurch gekennzeichnet, dass** das Dichtelement (15) sich zwischen dem Verbindungsabschnitt (12) des Anschlussstutzens (19) und dem Gehäuse (5) erstreckt, insbesondere bis zum Verbindungsabschnitt (12) des Anschlussstutzens (19) erstreckt.

9. Wasserführendes Haushaltsgerät nach einem der vorhergehenden Ansprüche, **dadurch gekennzeichnet, dass** das Dichtelement (15) an einem Stützring (25) abgestützt ist.

10. Wasserführendes Haushaltsgerät nach Anspruch 9, **dadurch gekennzeichnet, dass** der Stützring (25) am Verbindungsabschnitt (12) des Anschlussstutzens (19) angeformt ist.

11. Wasserführendes Haushaltsgerät nach einem der vorhergehenden Ansprüche, **dadurch gekennzeichnet, dass** das Dichtelement (15) einen Ringbund (41) zur Ausbildung eines Bewegungsanschlags für den Anschlussstutzen (19) des angrenzenden flüssigkeitsführenden Bauteils (3) aufweist.

12. Wasserführendes Haushaltsgerät nach Anspruch 10 oder 11, **dadurch gekennzeichnet, dass** das Dichtelement (15) am Verbindungsabschnitt (12) des Anschlussstutzens (19) innenseitig im Anschlussstutzen (17) angeordnet ist.

13. Wasserführendes Haushaltsgerät nach einem der vorhergehenden Ansprüche, **dadurch gekennzeichnet, dass** der Anschlussstutzen (19) aus einer Kunststoff-Hartkomponente und/oder das Dichtelement (15) aus einer Kunststoff-Weichkomponente gebildet ist, wobei insbesondere die Kunststoff-Weichkomponente eine Shore-Härte im Bereich von 50 bis 70 aufweist und die Kunststoff-Hartkomponente eine Shore-Härte von mehr als 70 aufweist.

14. Wasserführendes Haushaltsgerät nach einem der Ansprüche 4 oder 5 bis 13, wenn zumindest abhängig von Anspruch 4, **dadurch gekennzeichnet, dass** die Axialrippe (20) sich in radialer Richtung mit einer Länge erstreckt, die größer als die Länge ist, in die sich die Axialrippe (20) in Umfangsrichtung erstreckt.

15. Wasserführendes Haushaltsgerät nach einem der vorhergehenden Ansprüche, **dadurch gekennzeichnet, dass** das Gehäuse (5) als Pumpentopf einer Geschirrspülmaschine ausgebildet ist.

## Claims

1. Water-guiding household appliance, in particular dishwasher, having two liquid-guiding components (1, 3), wherein one liquid-guiding component (1) has an integrally formed connecting piece (19) which is connected in a liquid-tight manner to the other liquid-guiding component (3) by a joining movement in the axial direction (I) of the connecting piece (19), wherein the connecting piece (19) is associated with a vibration damper (14) which is designed to be rigid in the axial direction (I) for the performance of the joining movement and can be deformed by an axis of rotation to absorb torsional vibrations between the two liquid-guiding components (1, 3), **characterised in that** the liquid-guiding component (1) comprises in the axial direction (I), arranged one behind the other, a connecting section (12) associated with the connecting piece (19) for connection to the other liquid-guiding component (3), the vibration damper (14) designed as a vibration damping section, and a housing (5), wherein the connecting section (12) of the connecting piece (19) is spaced apart from the housing (5) of the liquid-guiding component (1) via a clearance (a) and a sealing element (15) is arranged between the connecting section (12) of the connecting piece (19) and the housing (5) of the liquid-guiding component (1) and bridges the clearance (a) in a liquid-tight manner.

2. Water-guiding household appliance according to claim 1, **characterised in that** the axis of rotation extends in the axial direction (I).

3. Water-guiding household appliance according to claim 2, **characterised in that** the vibration damper (14) is designed to be more rigid in the axial direction (I) than in the direction of the axis of rotation, which extends around the axial direction (I).

4. Water-guiding household appliance according to one of the preceding claims, **characterised in that** the vibration damper (14) is at least one axial rib (20) extending in the axial direction (I), which bridges a clearance (a) between the connecting section (12) and the housing (5) of the liquid-guiding component (1).

5. Water-guiding household appliance according to one of the preceding claims, **characterised in that** the sealing element (15) is arranged radially inside the vibration damper (14) of the connecting piece (19).

6. Water-guiding household appliance according to one of the preceding claims, **characterised in that** the sealing element (15) forms a fluid-tight connection with an inner peripheral surface of an opening (11) of the housing (5).

7. Water-guiding household appliance according to one of the preceding claims, **characterised in that** the vibration damper (14) is integrally formed on the housing (5) radially outside the housing opening (11).

8. Water-guiding household appliance according to one of the preceding claims, **characterised in that** the sealing element (15) extends between the connecting section (12) of the connecting piece (19) and the housing (5), in particular extends up to the connecting section (12) of the connecting piece (19).

9. Water-guiding household appliance according to one of the preceding claims, **characterised in that** the sealing element (15) is supported on a support ring (25).

10. Water-guiding household appliance according to claim 9, **characterised in that** the support ring (25) is integrally formed on the connecting section (12) of the connecting piece (19).

11. Water-guiding household appliance according to one of the preceding claims, **characterised in that** the sealing element (15) has an annular collar (41) for forming a movement stop for the connecting piece (19) of the adjacent liquid-guiding component (3).

12. Water-guiding household appliance according to claim 10 or 11, **characterised in that** the sealing element (15) is arranged on the connecting section (12) of the connecting piece (19) inside the connecting piece (17).

13. Water-guiding household appliance according to one of the preceding claims, **characterised in that** the connecting piece (19) is formed from a hard plastic component and/or the sealing element (15) is formed from a soft plastic component, wherein in particular the soft plastic component has a Shore hardness in the range from 50 to 70 and the hard plastic component has a Shore hardness of more than 70.

14. Water-guiding household appliance according to one of claims 4 or 5 to 13, if at least dependent on claim 4, **characterised in that** the axial rib (20) extends in the radial direction with a length which is greater than the length in which the axial rib (20) extends in the circumferential direction.

15. Water-guiding household appliance according to one of the preceding claims, **characterised in that** the housing (5) is designed as a pump pot of a dishwasher.

## Revendications

1. Appareil ménager à circulation d'eau, notamment lave-vaisselle, comprenant deux composants (1, 3) transportant du liquide, un composant (1) transportant du liquide présentant un embout (19) formé qui est relié, de manière étanche au liquide, à l'autre composant (3) transportant du liquide en direction axiale (I) de l'embout (19) au moyen d'un mouvement de jonction, un amortisseur de vibrations (14) étant associé à l'embout (19), lequel amortisseur de vibrations est réalisé de manière rigide pour la réalisation du mouvement de jonction et est déformable autour d'un axe de rotation pour réceptionner les vibrations de torsion entre les deux composants (1, 3) transportant du liquide, **caractérisé en ce que** le composant (1) transportant du liquide comprend, disposés les uns derrière les autres en direction axiale (I), une section de liaison (12) associée à l'embout (19), destinée à la liaison avec l'autre composant (3) transportant du liquide, l'amortisseur de vibrations (14) réalisé comme section d'amortissement de vibrations, et un boîtier (5), la section de liaison (12) de l'embout (19) étant distancée du boîtier (5) du composant (1) transportant du liquide au moins sur un espace libre (a), et un élément d'étanchéité (15) étant disposé entre la section de liaison (12) de l'embout (19) et le boîtier (5) du composant (1) transportant du liquide, lequel élément d'étanchéité chevauche l'espace libre (a) de manière étanche au liquide.

2. Appareil ménager à circulation d'eau selon la revendication 1, **caractérisé en ce que** l'axe de rotation s'étend en direction axiale (I).

3. Appareil ménager à circulation d'eau selon la revendication 2, **caractérisé en ce que** l'amortisseur de vibrations (14) est réalisé en direction axiale (I) de manière plus rigide qu'en direction de l'axe de rotation qui s'étend autour de la direction axiale (I).

4. Appareil ménager à circulation d'eau selon l'une quelconque des revendications précédentes, **caractérisé en ce que** l'amortisseur de vibrations (14) est au moins une nervure axiale (20) s'étendant en direction axiale (I), laquelle chevauche un espace libre (a) entre la section de liaison (12) et le boîtier (5) du composant (1) transportant du liquide.

5. Appareil ménager à circulation d'eau selon l'une quelconque des revendications précédentes, **caractérisé en ce que** l'élément d'étanchéité (15) est disposé radialement à l'intérieur de l'amortisseur de vibrations (14) de l'embout (19).

6. Appareil ménager à circulation d'eau selon l'une quelconque des revendications précédentes, **caractérisé en ce que** l'élément d'étanchéité (15) forme une liaison étanche au liquide avec une surface circonférentielle intérieure d'une ouverture (11) du boîtier (5).

7. Appareil ménager à circulation d'eau selon l'une quelconque des revendications précédentes, **caractérisé en ce que** l'amortisseur de vibrations (14) est formé sur le boîtier (5), radialement à l'extérieur de l'ouverture (11) de boîtier.

8. Appareil ménager à circulation d'eau selon l'une quelconque des revendications précédentes, **caractérisé en ce que** l'élément d'étanchéité (15) s'étend entre la section de liaison (12) de l'embout (19) et le boîtier (5), notamment **en ce qu'**il s'étend jusqu'à la section de liaison (12) de l'embout (19).

9. Appareil ménager à circulation d'eau selon l'une quelconque des revendications précédentes, **caractérisé en ce que** l'élément d'étanchéité (15) est soutenu sur une bague de support (25).

10. Appareil ménager à circulation d'eau selon la revendication 9, **caractérisé en ce que** la bague de support (25) est formée sur la section de liaison (12) de l'embout (19).

11. Appareil ménager à circulation d'eau selon l'une quelconque des revendications précédentes, **caractérisé en ce que** l'élément d'étanchéité (15) présente un collet annulaire (41) pour la réalisation d'une butée de mouvement pour l'embout (19) du composant (3) adjacent, transportant du liquide.

12. Appareil ménager à circulation d'eau selon la revendication 10 ou 11, **caractérisé en ce que** l'élément d'étanchéité (15) est disposé côté intérieur dans l'embout (17) sur la section de liaison (12) de l'embout (19).

13. Appareil ménager à circulation d'eau selon l'une quelconque des revendications précédentes, **caractérisé en ce que** l'embout (19) est formé à partir d'un composant en matière plastique dure et/ou **en ce que** l'élément d'étanchéité (15) est formé à partir d'un composant en matière plastique souple, notamment le composant en matière plastique souple présentant une dureté Shore située dans la plage de 50 à 70 et le composant en matière plastique dure présentant une dureté Shore de plus de 70.

14. Appareil ménager à circulation d'eau selon l'une quelconque des revendications 4 ou 5 à 13, si au moins dépendantes de la revendication 4, **caractérisé en ce que** la nervure axiale (20) s'étend en direction radiale avec une longueur qui est plus grande que la longueur dans laquelle la nervure axiale (20) s'étend en direction circonférentielle.

15. Appareil ménager à circulation d'eau selon l'une quelconque des revendications précédentes, **caractérisé en ce que** le boîtier (5) est réalisé comme puisard d'un lave-vaisselle.
